# EUROPÄISCHE PATENTSCHRIFT

(11) **EP 3 816 006 B1**
(45) Veröffentlichungstag und Bekanntmachung des Hinweises auf die Patenterteilung: **08.05.2024**
(21) Anmeldenummer: 19206272.7
(22) Anmeldetag: 30.10.2019
(51) Int. Cl.: B61B 12/02, B61B 12/06

(54) **ZUGSEILZWISCHENAUFHÄNGUNG FÜR EINE SEILBAHN**
INTERMEDIATE TRACTION CABLE SUSPENSION FOR A ROPEWAY
SUSPENSION INTERMÉDIAIRE DE CÂBLE TRACTEUR POUR UN TÉLÉPHÉRIQUE

(43) Veröffentlichungstag der Anmeldung: 05.05.2021
(73) Patentinhaber: Inauen-Schätti AG, 8762 Schwanden (CH)
(72) Erfinder: Burgo, Manuel, 8762 Schwanden (CH)
(74) Vertreter: Liebetanz, Michael

(56) Entgegenhaltungen:
- EP-A1- 3 375 686
- EP-A2- 2 228 277
- AT-B- 373 832
- CH-A- 421 169
- CH-A5- 683 414
- CH-A5- 695 101
- CN-A- 101 200 186
- JP-A- H0 314 761
- JP-A- S62 214 047
- US-A- 4 003 314
- US-A- 4 697 169
- US-B1- 6 720 873
- US-B2- 7 800 509

## Beschreibung

### TECHNISCHES GEBIET

Die vorliegende Erfindung betrifft eine Zugseilzwischenaufhängung für eine Seilbahn.

### STAND DER TECHNIK

Zugseilzwischenaufhängungen werden an Tragseilen auf der Seilbahnstrecke geklemmt und haben eine oder mehrere Zugseilrollen zur Führung und Unterstützung des Zugseiles. Sie dienen hauptsächlich dazu, um grosse Durchhänge sowie seitliches Auslenken des Zugseiles durch Wind zu verhindern und die Spurweite bei mehreren Tragseilen konstant zu halten. Durch diese Eigenschaften können lange Seilfeder, sowie kleine Spurweiten realisiert werden.

Zugseilzwischenaufhängungen werden auch Seilreiter oder Rollengefässe genannt.

Zugseilzwischenaufhängungen werden bei diversen Seilbahnsystemen eingesetzt, insbesondere bei Seilbahnsystemen mit 2 Tragseilen. Laut aktuellen Europäischen Seilbahnnormen dürfen Zugseilzwischenaufhängungen nur mit zwei oder mehreren Tragseilen zugelassen werden.

Der Grund dafür, dass bekannte Zugseilzwischenaufhängungen für Systeme geschaffen sind, die 2 Tragseile haben, liegt darin, dass die Zugseilzwischenaufhängungen dort an die Tragseile geklemmt werden und so nicht auspendeln können.

CH 695 101 A5 zeigt eine Vorrichtung zur Stabilisierung eines Fahrwegs mit einem Tragseil und einem Zugseil, wobei mindestens zwei Seilträger in ein Tragseil eingreifen und ein Zugseil führen, wobei diese Seilträger auf gegenüberliegenden Fahrbahnseiten durch eine abstandshaltende Konstruktion miteinander verbunden sind.

US 4,003,314 A zeigt eine Überwachungseinrichtung für Skilifte, mit der Seilentgleisung, Seildurchhang und andere relevante Betriebszustände überwacht und mit Sicherheitssignalen gemeldet werden.

### DARSTELLUNG DER ERFINDUNG

Das Fehlen eines zweiten Tragseiles ist ein grosses Problem bei Zugseilzwischenaufhängungen von Pendelbahnen mit einem Tragseil. Die Zugseilzwischenaufhängung kann durch Windkräfte auf dieser oder Windkräfte vom Zugseil her um das Tragseil drehen. Das Tragseil ist der Drehpunkt im Momentengleichgewicht. Gegenkräfte sind das Eigengewicht der Zugseilzwischenaufhängung, sowie das Zugseil, solange es aufliegt. Diese Punkte und die daraus resultierenden Probleme einer Zugseilentgleisung werden mit den Lösungen gemäss der vorliegenden Erfindung verhindert oder überwacht.

Ausgehend von diesem Stand der Technik ist es eine Aufgabe der Erfindung eine Zugseilzwischenaufhängung anzugeben, einen Zugseilabwurf, der beispielsweise durch dynamische Seilschwingungen entstehen kann, im Betrieb selber und in Nicht-Betriebszeiten zu vermeiden oder zumindest entsprechend zu überwachen.

Eine Zugseilzwischenaufhängung gemäss der Erfindung ist für eine Seilbahn mit mindestens einem Tragseil und mit mindestens einem Zugseil vorgesehen. Dabei umfasst die Zugseilzwischenaufhängung einen Rahmen, an dem mindestens eine Seilrolle je Zugseil vorgesehen ist. Ferner ist eine Kontrolleinheit, ein mit dieser verbundener Energiespeicher oder Energieerzeuger und eine Übertragungseinheit von Signalen der Kontrolleinheit an eine Empfangsstation der Seilbahnstation vorgesehen.

Dabei weist die Übertragungseinheit mindestens zwei voneinander isolierte Kondensatorplatten auf, die mit der Kontrolleinheit verbunden sind. Die Kontrolleinheit ist ausgestaltet, um über die Kondensatorplatten kontinuierlich oder intermittierend Präsenzsignale über das zugeordnete Zugseil an die Empfangsstation der Seilbahnstation zu übermitteln, so dass bei Abwesenheit des zugeordneten Zugseils an oder auf der entsprechenden Seilrolle durch Abwesenheit von Präsenzsignalen ein Seilabwurf-Signal in der Seilbahnstation erzeugbar ist.

Es sind mindestens zwei Kondensatorplatten in einem vorbestimmten Abstand voneinander in der unmittelbaren Umgebung der Seilrolle angeordnet, so dass bei einer Kapazitätsänderung der Platten gegenüber dem Zugseil das zu übertragende Signal nicht mehr auf das Zugseil aufmoduliert wird. Bei einer Seilrolle sind vorteilhafterweise jeweils zwei Kondensatorplatten vor und hinter der einzelnen Seilrolle angeordnet.

Wenn nun zwei Seilrollen in einem Längsabstand der Zugseilzwischenaufhängung angeordnet sind, werden die Kondensatorplatten vorteilhafterweise zwischen den Seilrollen V-förmig unterhalb der Längsverbindungslinie der Umfangsoberfläche der Seilrollen zusammenlaufen. Dabei entspricht vorteilhafterweise der minimale Abstand der zwei Kondensatorplatten zwischen dem Einfachen und Dreifachen der Seildicke des Zugseils, beispielsweise zwischen 10 und 30 Millimeter.

Zusätzlich kann mindestens ein Lastmessbolzen zur Messung des auf die Seilrollenoberflächen lastenden Drucks des Zugseils je Zugseil vorgesehen sein, der mit der Kontrolleinheit verbunden ist und mit dem die Präsenz des zugeordneten Zugseils an oder auf der entsprechenden Seilrolle feststellbar ist.

Der Energiespeicher oder Energieerzeuger kann einen oder mehrere Energiespeicher oder Energieerzeuger aus der Gruppe umfassen: Photovoltaikpaneel, Akkumulator, aufladbare oder nicht aufladbare Batterie, Seilrollen gestützter Nabendynamo.

Bei einer vorteilhaften Ausführungsform weist die allgemeine Zugseilzwischenaufhängung einen Abwurfschutz je Zugseil auf, wobei der Abwurfschutz einen Antrieb und mindestens einen Sperrbügel umfasst, welcher Sperrbügel aus einer nicht in das Zugseil eingreifenden Ruheposition durch den Antrieb in Bezug auf eine benachbarte Seilrolle über diese bewegbar, um einen Abwurf des Zugseils zu verhindern. Dabei kann Es muss dabei nicht zwingend ein eindrehbarer Sperrbügel sein. Auch ein Linearantrieb, der direkt einen Bolzen zum Verschliessen bewegt, ist einsetzbar.

Vorteilhafterweise ist die Ebene des eingeschwenkten oder linear eingefahrenen Sperrbügels tiefer ist als die Umfangränder einer eine Umlaufnut aufweisenden benachbarten Seilrolle. Dann ist ein Herausspringen des Zugseils nochmals unwahrscheinlicher und es können keine grossen Anfangskräfte bei einer solchen Anfangsabwurfbewegung auftreten. Am besten ist der Sperrbügel unterhalb eines Längsprofils des Rahmens der Zugseilzwischenaufhängung angeordnet, so dass ein Verbiegen des Sperrbügels aus der Schwenkebene heraus vermieden werden kann.

Der Abwurfschutz weist vorteilhafterweise einen Anschlagschalter auf, mit dem die Geschlossenstellung des Sperrbügels detektierbar ist. Damit kann verhindert werden, dass ein Fahrzeug unbeabsichtigt auf den geschlossenen Sperrbügel der Zugseilzwischenaufhängung auffährt.

Eine Kontrolleinheit der Zugseilzwischenaufhängung bewegt auf Empfang eines Verriegelungssignals den Sperrbügel in die Geschlossenstellung und auf Empfang eines Entriegelungssignals den Sperrbügel in die Offenstellung. Vorteilhafterweise kann die Zugseilzwischenaufhängung hierfür einen, eine Drehung der Seilrolle feststellenden Sensor aufweisen, wobei nach Stoppen der Seilrolle das Verriegelungssignal nach einem vorbestimmten Zeitintervall ausgelöst wird und nach Anlaufen der Seilrolle über ein vorbestimmtes Zeitintervall das Entriegelungssignal ausgelöst wird. Das Zeitintervall zum Stoppen sollte so gewählt sein, dass nicht ein kurzer Betriebsstopp dieses Verriegeln auslöst, sondern z.B. der Betriebsschluss am Abend und genauso sollte ein Anrollen der Seilrollen signifikant sein und auf eine Aufnahme des Seilbahnbetriebs, beispielsweise am nächsten Morgen hindeuten. Ein solcher Betriebsstop kann ein Zeitintervall von nur 1-3 Minuten, aber auch mehrere Stunden bis Tage umfassen.

Bei einer anderen Lösung kann die Zugseilzwischenaufhängung einen Funk- oder Mobilfunksystem-Empfänger aufweisen, mit dem von einer Seilbahnstation aus ein Verriegelungssignal und ein Entriegelungssignal für den Abwurfschutz auslösbar ist. Das Vorsehen einer solchen Funk- oder Mobilfunksystem-Empfängeranlage an der Kontrolleinheit heisst nicht, dass nicht eine kapazitive Abwurfmessung mit den Kondensatorplatten nach einem der anderen Ansprüche damit verbunden ist, da so die energiesparende kapazitive Meldung des Betriebszustandes mit der bequemen und auch sicheren Verriegelung zu bestimmten Betriebszeiten verbunden werden kann.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Darstellung einer an einem Tragseil montierten Zugseilzwischenaufhängung mit einer Vorrichtung zur Zugseildetektion mit einer kapazitiven Datenübertragung,
- Fig. 2: eine Seitenansicht der Zugseilzwischenaufhängung nach Fig. 1,
- Fig. 3: eine Draufsicht auf die Zugseilzwischenaufhängung nach Fig. 1,
- Fig. 4: eine Querschnittsansicht von vorne einer Zugseilzwischenaufhängung nach Fig. 1,
- Fig. 5: eine perspektivische Darstellung einer an einem Tragseil montierten Zugseilzwischenaufhängung ähnlich zu der nach Fig. 1 mit einer Vorrichtung zur Zugseildetektion mit anderen Sensoren (nicht gemäss der Erfindung),
- Fig. 6: eine perspektivische Darstellung einer an einem Tragseil montierten Zugseilzwischenaufhängung ähnlich zu der nach Fig. 1 mit einer Vorrichtung zur Zugseildetektion mit Lastmessbolzen,
- Fig. 7: eine perspektivische Darstellung einer an für zwei Tragseile vorgesehenen und an diesen montierten Zugseilzwischenaufhängung ähnlich zu der nach Fig. 1 mit einer Zugseilrolle und mit einer Vorrichtung zur Zugseildetektion mit einer kapazitiven Datenübertragung,
- Fig. 8: eine perspektivische Darstellung einer an für zwei Tragseile vorgesehenen und an diesen montierten Zugseilzwischenaufhängung ähnlich zu der nach Fig. 7 mit einer Zugseilrolle mit einem Abwurfschutz,
- Fig. 9: eine Vorderansicht der Zugseilzwischenaufhängung nach Fig. 7,
- Fig. 10: eine Seitenansicht der Zugseilzwischenaufhängung nach Fig. 7,
- Fig. 11: eine Draufsicht auf die Zugseilzwischenaufhängung nach Fig. 7,
- Fig. 12: eine perspektivische Darstellung einer an für zwei Tragseile vorgesehenen und an diesen montierten Zugseilzwischenaufhängung ähnlich zu der nach Fig. 7 mit zwei Zugseilrollen und mit einer Vorrichtung zur Zugseildetektion mit einer kapazitiven Datenübertragung,
- Fig. 13: eine perspektivische Darstellung einer an für zwei Tragseile vorgesehenen und an diesen montierten Zugseilzwischenaufhängung ähnlich zu der nach Fig. 13 mit zwei Zugseilrollen mit einer Vorrichtung zur Zugseildetektion mit einer kapazitiven Datenübertragung und einem Abwurfschutz,
- Fig. 14: eine Vorderansicht der Zugseilzwischenaufhängung nach Fig. 12,
- Fig. 15: eine Seitenansicht der Zugseilzwischenaufhängung nach Fig. 12,
- Fig. 16: eine Draufsicht auf die Zugseilzwischenaufhängung nach Fig. 12,
- Fig. 17: eine perspektivische Darstellung einer an einen Tragseil montierten Zugseilzwischenaufhängung ähnlich zu der nach Fig. 1 mit zwei Zugseilrollen und mit einem Abwurfschutz in geöffneter Position,
- Fig. 18: eine perspektivische Darstellung der Zugseilzwischenaufhängung nach Fig. 18 mit dem Abwurfschutz in geschlossener Position,
- Fig. 19: eine perspektivische Darstellung einer an einem Tragseil montierten Zugseilzwischenaufhängung mit einer Vorrichtung zur Zugseildetektion und mit einem Abwurfschutz in geschlossener Stellung,
- Fig. 20: eine Seitenansicht der Zugseilzwischenaufhängung nach Fig. 19,
- Fig. 21: eine Draufsicht auf die Zugseilzwischenaufhängung nach Fig. 19,
- Fig. 22: eine perspektivische Darstellung einer an Doppeltragseilen montierten Zugseilzwischenaufhängung für eine Pendelbahn mit grossem Tragseilabstand, mit einer Zugseilrolle,
- Fig. 23: eine Vorderansicht der Zugseilzwischenaufhängung nach Fig. 22,
- Fig. 24: eine Seitenansicht der Zugseilzwischenaufhängung nach Fig. 22 von ausserhalb,
- Fig. 25: eine Draufsicht auf die Zugseilzwischenaufhängung nach Fig. 22,
- Fig. 26: einen Ausschnitt nach Fig. 23 der Vorderansicht der Zugseilzwischenaufhängung nach Fig. 22,
- Fig. 27: eine Seitenansicht auf die Zugseilzwischenaufhängung nach Fig. 22 von zwischen den Tragseilen,
- Fig. 28: eine Draufsicht auf die Zugseilzwischenaufhängung nach Fig. 22,
- Fig. 29: eine perspektivische Darstellung eines Ausschnitts eines Teils der an einem der beiden Doppeltragseile montierten Zugseilzwischenaufhängung nach Fig. 22 mit einer kapazitiven Datenübertragung,
- Fig. 30: eine perspektivische Darstellung eines Ausschnitts eines Teils der an einem der beiden Doppeltragseilen montierten Zugseilzwischenaufhängung nach Fig. 22 mit einem geschlossenen Abwurfschutz,
- Fig. 31: einen Ausschnitt nach Fig. 23 der Vorderansicht einer Zugseilzwischenaufhängung ähnlich zu der nach Fig. 22 aber mit zwei Zugseilrollen,
- Fig. 32: eine Seitenansicht auf die Zugseilzwischenaufhängung nach Fig. 31 von zwischen den Tragseilen,
- Fig. 33: eine Draufsicht auf die Zugseilzwischenaufhängung nach Fig. 32,
- Fig. 34: eine perspektivische Darstellung eines Ausschnitts eines Teils der an einem der beiden Doppeltragseilen montierten Zugseilzwischenaufhängung nach Fig. 32 mit einer kapazitiven Datenübertragung, und
- Fig. 35: eine perspektivische Darstellung eines Ausschnitts eines Teils der an einem der beiden Doppeltragseile montierten Zugseilzwischenaufhängung nach Fig. 32 mit einem geschlossenen Abwurfschutz.

### BESCHREIBUNG BEVORZUGTER AUSFÜHRUNGSFORMEN

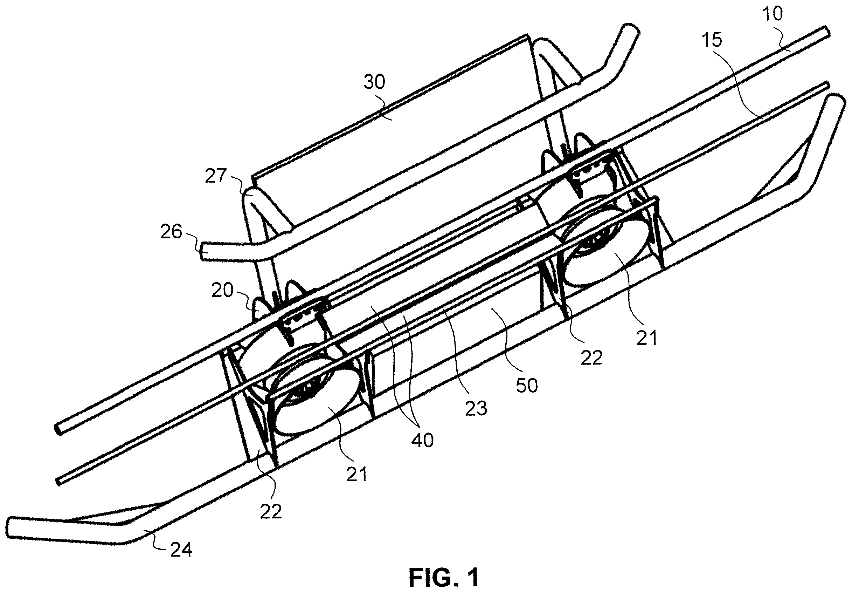

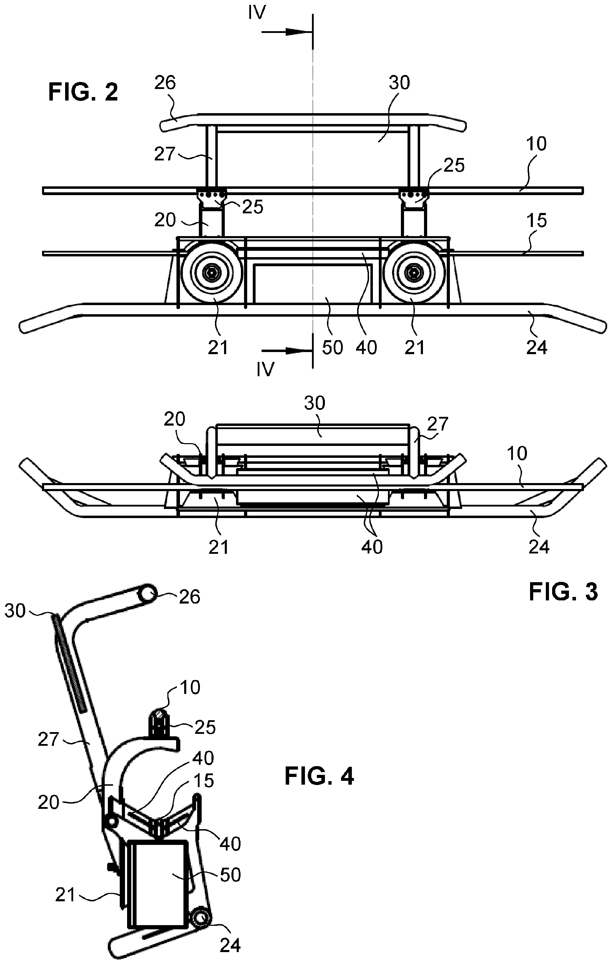

Die Fig. 1 zeigt eine perspektivische Darstellung einer an einem Tragseil 10 montierten Zugseilzwischenaufhängung mit einer Vorrichtung zur Zugseildetektion mit einer kapazitiven Datenübertragung. Die Fig. 2 zeigt dazu eine Seitenansicht der Zugseilzwischenaufhängung nach Fig. 1, Fig. 3 eine Draufsicht auf die Zugseilzwischenaufhängung nach Fig. 1, und Fig. 4 eine Querschnittsansicht von vorne einer Zugseilzwischenaufhängung nach Fig. 1.

Alle identischen Merkmale erhalten in den Figuren dieselben Bezugszeichen, auch Ausführungsbeispiel übergreifend.

Die Zugseilzwischenaufhängung weist einen Rollenträger 20 auf, an dem hier zwei Rollen 21 hintereinander montiert sind. Es können natürlich auch mehr als zwei Rollen 21, zum Beispiel vier, montiert werden. Die Rollen 21 sind Seilrollen, weisen also in Umfangrichtung eine Umfangsnut auf, in der das Zugseil 15 durchläuft. Die Rollen 21 sind von einem Rahmen 22 eingerahmt, der auch eine über den Rollen 21 angeordnete Längsstrebe 23 aufweist. An diesem Rahmen 22 ist unterhalb der Rollen 21 ein sogenannter Gehängeabweiser 24 vorgesehen, dessen freien Enden zu den Rollen hin zeigen.

An den zwei nach oben ragenden Profilen der Rollenträger 20 sind jeweils eine Klemme 25 vorgesehen, die im Bereich zu einer zugeordneten Rolle 21 die Zugseilzwischenaufhängung an dem Tragseil 10 befestigen. An den Rollenträgern 20 ist zudem jeweils ein L-Profil vorgesehen, welches gegenüber der Rollenachse nach aussen geneigt ist und im Bereich oberhalb des Tragseils 10, vorzugsweise im Wesentlichen genau über dem Tragseil 10, einen längs verlaufenden und an seinen beiden freien Enden nach innen abgewinkelten Laufwerk-Abweiser 26 aufweist.

Für eine unabhängige Energieversorgung ist zwischen den L-Profilen eine Photovoltaikpaneele 30 vorgesehen.

Zwei V-förmig zusammenlaufende, aber sich nicht kontaktierende, Kondensatorplatten 40 sind zwischen den Rollen 21 vorgesehen. Diese Kondensatorplatten 40 verlaufen schräg unterhalb der Rollen und weisen einen definierten Abstand ihrer unteren Kanten auf, der dem Durchmesser des Zugseiles 15 entspricht. Der definierte Abstand kann auch das Zwei- bis Fünffache sein. Wesentlich ist dieser Abstand dafür, dass ggf. Wasser abfliessen kann. Mit anderen Worten, das Zugseil wird auf einer im Wesentlichen geraden Strecke über die Seilrollen 21 geführt und weist dabei einen im Wesentlichen gleichförmigen Abstand von beiden Kondensatorplatten 40 auf. Mit dem allgemeinen Bezugszeichen 50 ist die Kontrolleinheit bezeichnet, die mittels elektrischen Leitungen (nicht dargestellt) mit dem Photovoltaikpaneel 30 und den Kondensatorplatten 40 verbunden ist. Die Kontrolleinheit 50 verfügt auch über eine Batterie oder Akkumulator als Energiespeicher zur Funktionsgarantie in lichtlosen Zeiten, e.g. über Nacht. Die Steuerung erzeugt Signale, beispielsweise analoge Signale und überträgt diese in bekannter Weise bei Anwesenheit des Zugseils 15 an den Rollen über die entsprechende Kapazität zwischen den Kondensatorplatten 40 an eine entsprechende kapazitive Empfangseinheit an einer Seilbahnstation, beispielsweise die Talstation, die Bergstation oder eine Zwischenstation. Die zueinander isolierten Kondensatorplatten 40 weisen eine bestimmte Kapazität auf, die das Übertragung eines Signales über das Zugseil 15 an eine entsprechende Auswerteeinheit in der Berg- oder Talstation der Seilbahn ermöglicht. Wenn das Zugseil 15 nun entgleist und nicht mehr in dem in den Fig. 1 bis 4 gezeigten Bereich liegt, werden keine Signale mehr an die Station gesandt und ein Nothalt der Seilbahn ist die Folge. Eine solche Übertragung von Daten über das Zugseil 15 ist beispielsweise bekannt aus der Übertragung von Windmessdaten von exponierten Stützen. Bei der Überfahrt der Zugseilzwischenaufhängung durch ein Fahrzeug wird das Zugseil natürlich abgehoben und in diesem Zeitfenster wird in der Berg- oder Talstation der Seilbahn die Überwachung auf inaktiv gesetzt. Dort ist aufgrund des Wissens um die Position der angekoppelten Seilbahnkabine am Zugseil 10 bei einer Überfahrtsposition für dieses Zeitfenster die Überwachungsschaltung inaktiv, löst also trotz abgehobenen Zugseils 15 und damit ausbleibendem Signal nicht aus.

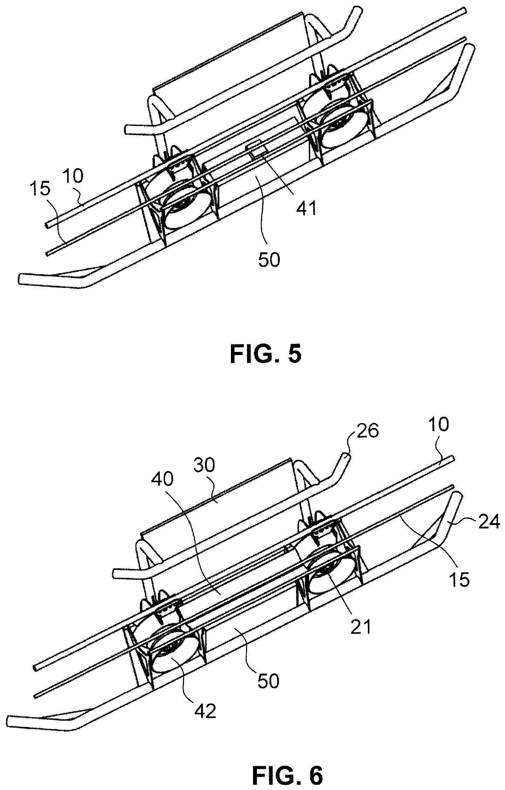

Die Fig. 5 zeigt eine perspektivische Darstellung einer an einem Tragseil 10 montierten Zugseilzwischenaufhängung ähnlich zu der nach Fig. 1 mit einer Vorrichtung zur Zugseildetektion mit anderen Sensoren. Die anderen Merkmale bleiben gegenüber den Fig. 1 bis 4 gleich. Lediglich anstelle der Kondensatorplatten 40 ist ein optischer oder ein induktiver Sensor 41 vorgesehen. Bei einem optischen Sensor wird ein Lichtstrahl bevorzugt von einer eingebauten Lichtquelle aus dem Sensorbereich des Sensors 41 abgestrahlt, dessen Reflektion durch das Zugseil 15 wieder im Sensorbereich von einem entsprechenden Lichtsensor aufgenommen wird. Bei Abwesenheit eines Lichtsignals (ausserhalb einer Überfahrung) stellt die Kontrolleinheit diese fest und übermittelt das Signal an die Zentraleinheit. Diese Übermittlung kann auf dem Funkwege stattfinden.

Die Fig. 6 zeigt eine perspektivische Darstellung einer an einem Tragseil 10 montierten Zugseilzwischenaufhängung ähnlich zu der nach Fig. 1 mit einer Vorrichtung zur Zugseildetektion mit Lastmessbolzen 42, bei dem ein Kraftmessbolzen in der Zugseilrolle 21 montiert ist, um eine Kraftübertragung von dem auf der Zugseilrolle 21 aufliegenden und damit eine Kraft auf diese ausübenden Zugseil 15 zu erfassen oder bei fehlendem Zugseil auf den Zugseilrollen 21 diese geänderte Kraft festzustellen und an die Zentraleinheit zu übermitteln. Bei beiden alternativen Ausführungen wird im Falle der Überfahrung die Übermittlung nicht vorgenommen oder in der Zentraleinheit nicht ausgewertet. Sofern die Übermittlung nicht vorgenommen wird, ist ein weiterer Sensor vorgesehen, der die Überfahrung detektiert, beispielsweise der Anwesenheit der Klemme des Fahrzeugs im Bereich der Zugseilzwischenaufhängung.

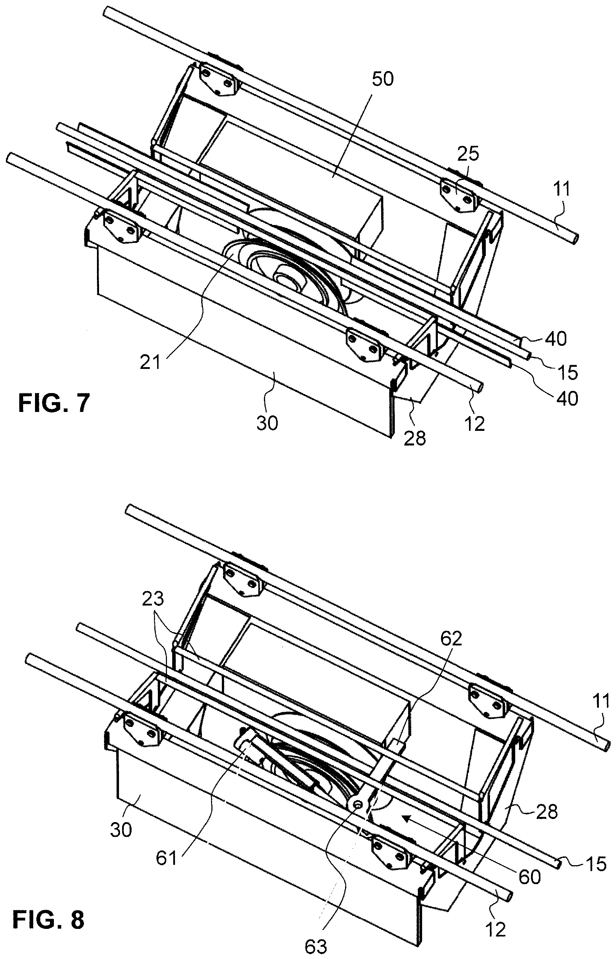

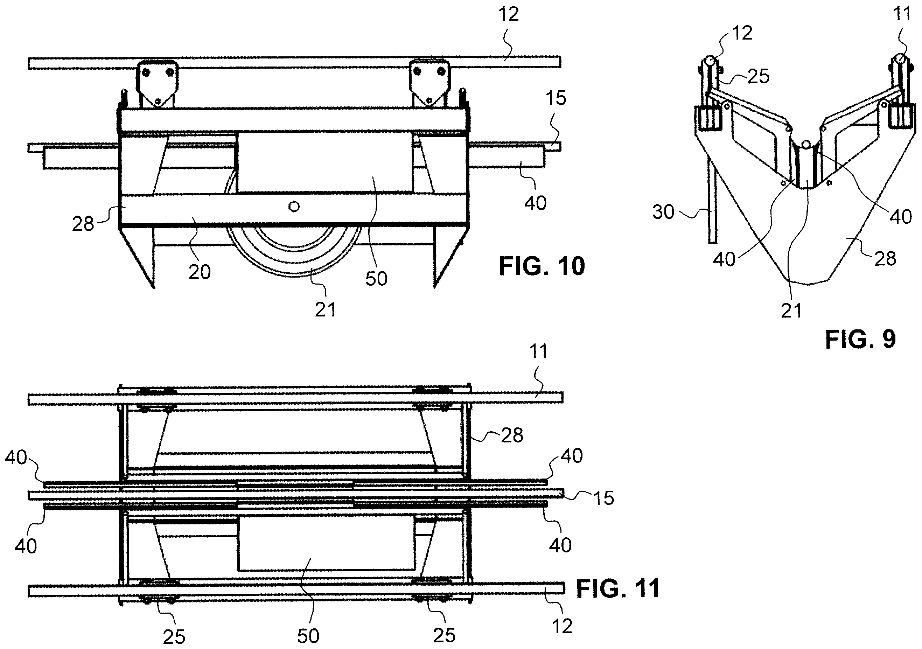

Fig. 7 zeigt eine perspektivische Darstellung einer an für zwei Tragseile 11 und 12 vorgesehenen und an diesen montierten Zugseilzwischenaufhängung ähnlich zu der nach Fig. 1 mit einer Zugseilrolle 21 und mit einer Vorrichtung zur Zugseildetektion mit einer kapazitiven Übertragung; Fig. 9 zeigt dazu eine Vorderansicht der Zugseilzwischenaufhängung nach Fig. 7, Fig. 10 eine Seitenansicht der Zugseilzwischenaufhängung nach Fig. 7, und Fig. 11 eine Draufsicht auf die Zugseilzwischenaufhängung nach Fig. 7.

Hier ist eine einzelne Rolle 21 zwischen zwei seitlichen Rollenträgern 20 und zwischen zwei an den Längsenden der Aufhängung vorgesehenen Querprofilen 28 angeordnet. Die Kondensatorplatten 40 sind jeweils zwei geteilt vor und nach der einzelnen Rolle 21 vorgesehen, wobei alternativ entweder zwei kapazitive Übertragungen vorgenommen werden, nämlich der beiden V-förmig gegenüberliegenden Kondensatorplatten 40 vor und hinter der Rolle 21 (in Seilrichtung 15 gesehen), oder eine einzige kapazitive Übertragung, wenn die beiden in Seilrichtung hintereinander liegenden Kondensatorplatten zusammengeschaltet werden. Die Funktionsweise der kapazitiven Übertragung ist wie oben.

Fig. 8 zeigt eine perspektivische Darstellung einer an für zwei Tragseile 11 und 12 vorgesehenen und an diesen montierten Zugseilzwischenaufhängung ähnlich zu der nach Fig. 7 mit einer einzelnen Zugseilrolle 21 mit einer Vorrichtung zur Zugseildetektion mit einer kapazitiven Übertragung und einem Abwurfschutz 60. Die kapazitive Übertragung geschieht in gleicher Weise wie in Fig. 7 mit den beiden geteilten Kondensatorplatten.

An den Querprofilen 28 sind Längsstreben 23 vorgesehen, die oberhalb der einzelnen Rolle 21 verlaufen. Seitlich zwischen der Rolle 21 und der Photovoltaikpaneele 30 ist ein Abwurfschutz 60 vorgesehen, der einen Antrieb 61 umfasst, mit dem ein Sperrbügel 62 um eine im wesentlichen vertikale Achse 63 ein- und ausdrehbar ist. Dabei bedeutet die in der Fig. 8 dargestellte Lage mit eingedrehtem Sperrbügel 62, dass dieser unterhalb der Längsstreben 23 und oberhalb der Rolle 21 einen Abwurf des Zugseils 15 verhindert. In anderen, hier zeichnerisch nicht dargestellten Ausführungsformen kann der Sperrbügel ein aus einem Zylinder ausfahrbarer Bolzen oder Bügel sein, der sich linear von einer eingefahrenen bis zu einer ausgefahrenen Position bewegt. Vorteilhafterweise verläuft dabei diese Linearbewegung quer zur Seilrichtung.

Dabei kann die folgende Funktion realisiert werden. Der Standardzustand entspricht dem eingedrehten und damit gesichertem Zugseil 15. Bei nahendem Fahrzeug, entweder durch Eigendetektion von der Steuer- und Kontrolleinheit 50 oder durch Signal von der Berg- oder Talstation der Seilbahn wird der Sperrbügel 62 ausgeschwenkt und verfährt damit parallel oder im Wesentlichen parallel zum Seil 15. Nach Durchfahrt des Fahrzeugs wird der Sperrbügel 62 wieder eingeschwenkt.

Bei einer anderen Ausführung der Funktion wird der Sperrbügel am Morgen bei Betriebsbeginn ausgeschwenkt und gibt das Zugseil 15 frei und wird am Abend bei Betriebsende wieder eingeschwenkt und blockiert das Zugseil 15. Je nach Wind- und Wetterbedingungen sind auch Kombinationen von diesen Vorgehensweisen möglich.

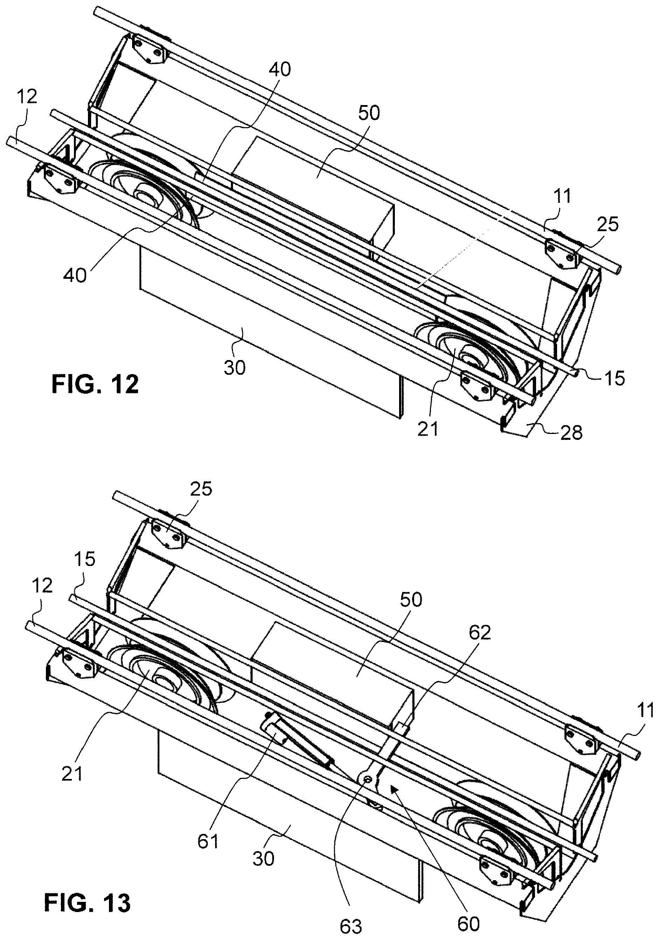

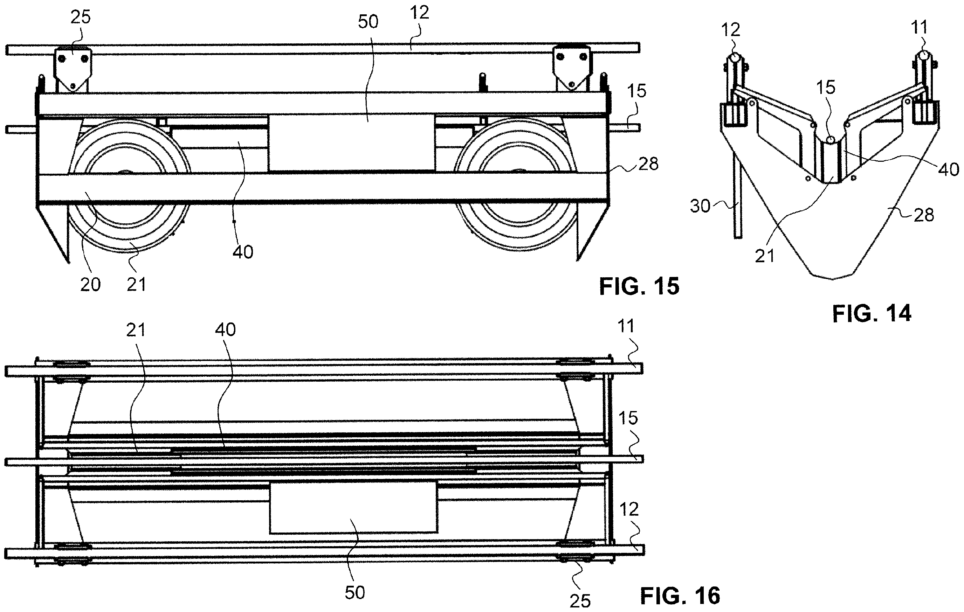

Fig. 12 zeigt eine perspektivische Darstellung einer an für zwei Tragseile 11 und 12 vorgesehenen und an diesen montierten Zugseilzwischenaufhängung ähnlich zu der nach Fig. 7 mit zwei Zugseilrollen 21 und mit einer Vorrichtung zur Zugseildetektion mit einer kapazitiven Datenübertragung mit zwei Kondensatorplatten 40. Der Aufbau entspricht im Wesentlichen den obigen Ausführungsbeispielen und es sind dieselben Bezugszeichen für die gleichen Merkmale verwendet worden. Die Fig. 14 zeigt eine Vorderansicht der Zugseilzwischenaufhängung nach Fig. 12, die Fig. 15 eine Seitenansicht der Zugseilzwischenaufhängung nach Fig. 12, und die Fig. 16 eine Draufsicht auf die Zugseilzwischenaufhängung nach Fig. 12.

Fig. 13 zeigt eine perspektivische Darstellung einer an für zwei Tragseile 11 und 12 vorgesehenen und an diesen montierten Zugseilzwischenaufhängung ähnlich zu der nach Fig. 13 mit zwei Zugseilrollen 21 mit einer Vorrichtung zur Zugseildetektion mit einer kapazitiven Datenübertragung mit zwei Kondensatorplatten 40 und einem Abwurfschutz 60.

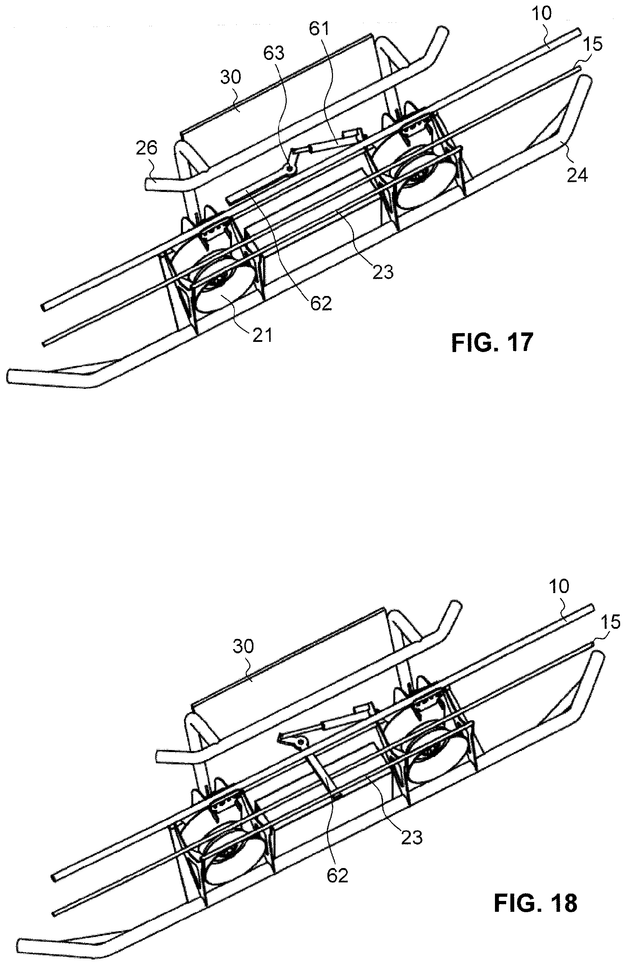

Fig. 17 zeigt eine perspektivische Darstellung einer an einen Tragseil 10 montierten Zugseilzwischenaufhängung ähnlich zu der nach Fig. 1 mit zwei Zugseilrollen 21 und mit einem Abwurfschutz 60 in geöffneter Position. Dabei ist der Sperrbügel 62 im Wesentlichen parallel zum Zugseil 15 ausgerichtet und verläuft oberhalb von diesem, vorzugsweise unterhalb des Querbügels 23.

Fig. 18 zeigt dazu eine perspektivische Darstellung der Zugseilzwischenaufhängung nach Fig. 18 mit dem Abwurfschutz 60 in geschlossener Position, der Sperrbügel 62 ist quer eingeschwenkt.

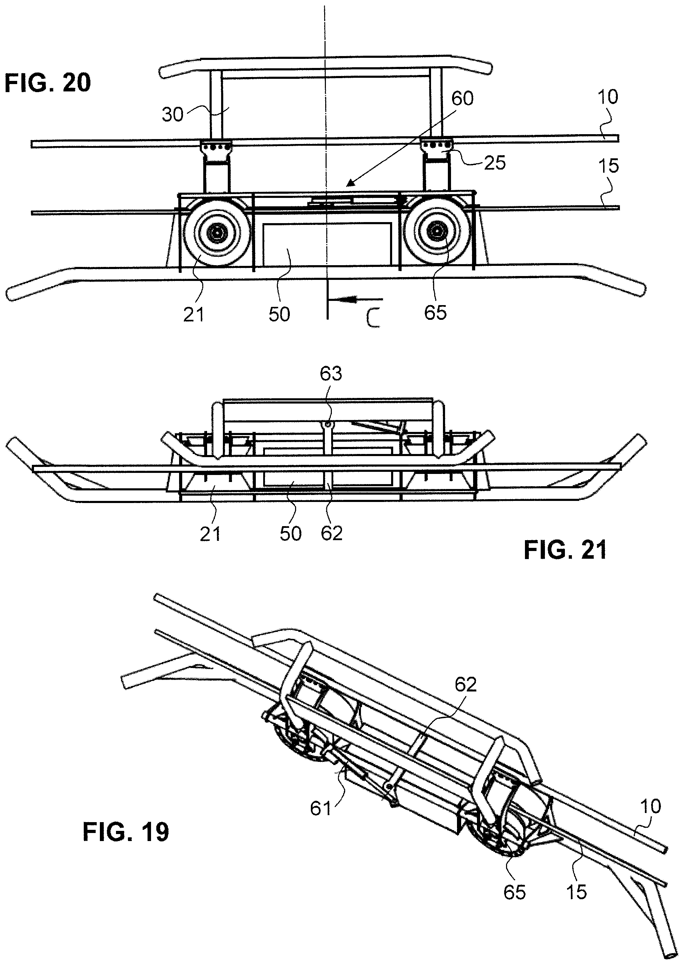

Fig. 19 zeigt eine perspektivische Darstellung einer an einem Tragseil 10 montierten Zugseilzwischenaufhängung mit einer Vorrichtung zur Zugseildetektion und mit einem Abwurfschutz 60 in geschlossener Stellung. Fig. 20 zeigt dazu eine Seitenansicht der Zugseilzwischenaufhängung nach Fig. 19, Fig. 21 eine Draufsicht auf die Zugseilzwischenaufhängung nach Fig. 19. Dabei können Sensoren 65 an den Rollen 21 eingesetzt werden, die die Bewegung der Zugseilrollen 21 erkennen und den elektrischen Abwurfschutz 60 schliessen, wenn die Seilbahn längere Zeit stillsteht und so ein Abwurf des Zugseils 15 verhindert. Bei Inbetriebnahme der Seilbahn wird der Mechanismus wieder geöffnet und die Sensoren 65 geben zeitverzögert den Öffnungsbefehl. Überwacht wird dieser Abwurfschutz 60 mit zwei Endschaltern für den Sperrbügel 62, die die Signale über die kapazitive Zugseilüberwachung in die Station senden und im Notfall die Bahn stoppen, sollte die Verriegelung vor der Überfahrt des Fahrzeuges nicht geöffnet sein. Die Datenübertragung über die kapazitive Zugseilüberwachung ist dabei immer möglich, da ja bei gesperrtem Zugseil, dieses korrekt geführt ist.

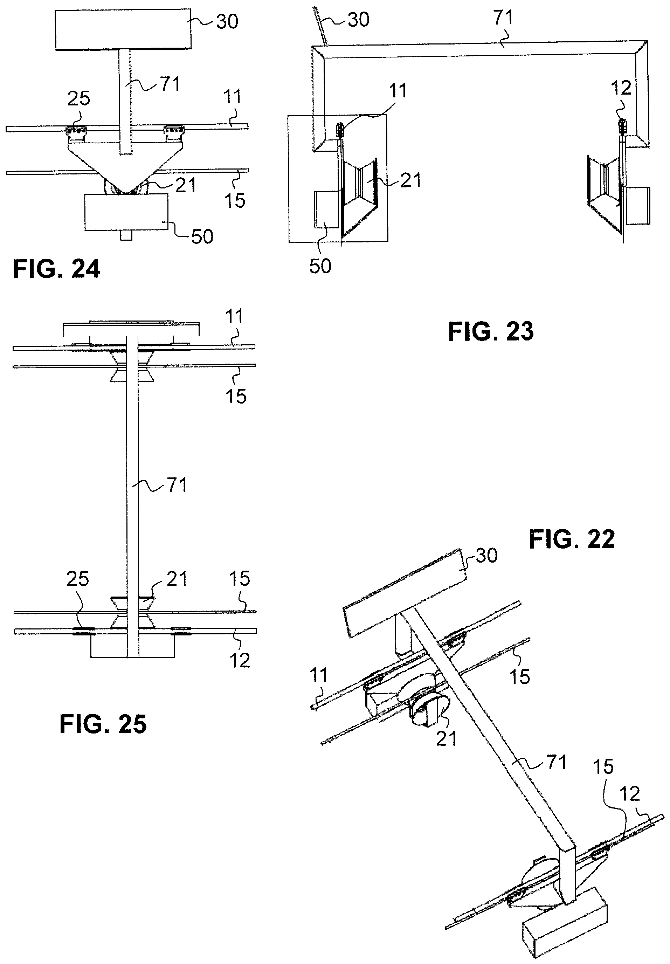

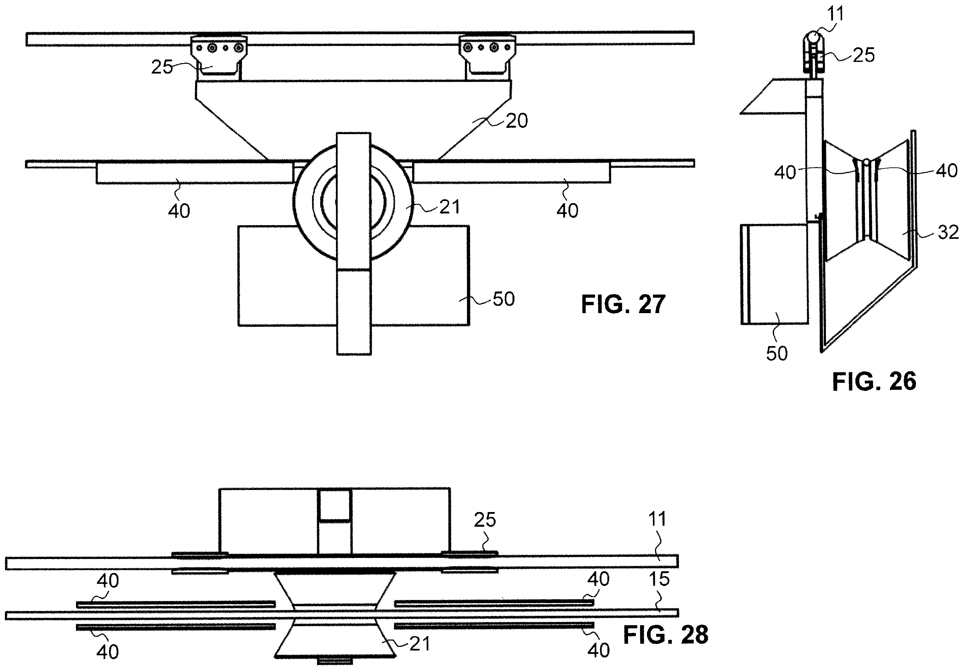

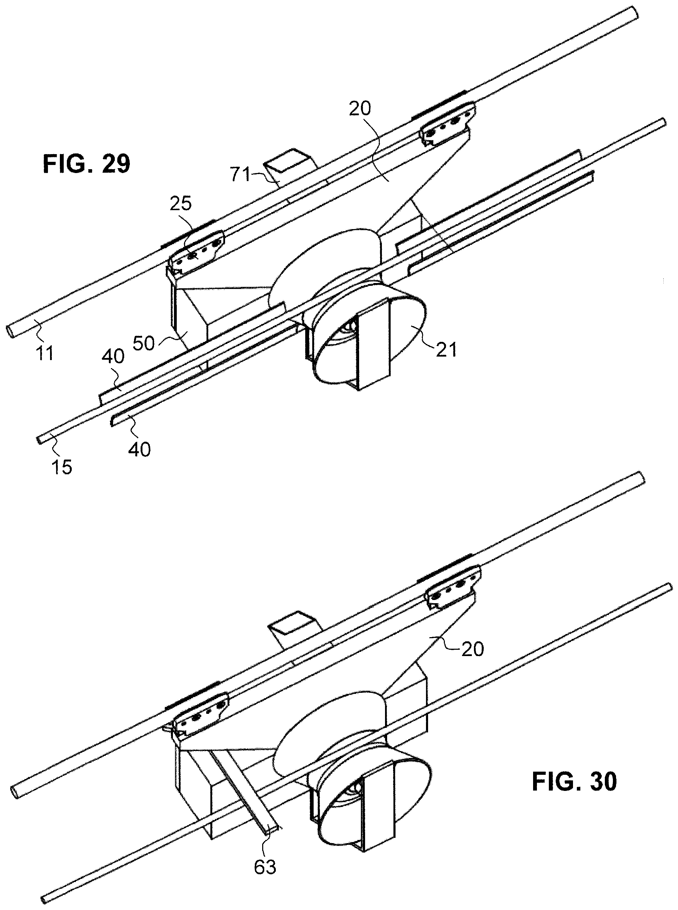

Fig. 22 zeigt eine perspektivische Darstellung einer an Doppeltragseilen 11 und 12 montierten Zugseilzwischenaufhängung für eine Pendelbahn mit grossem Tragseilabstand, mit einer Zugseilrolle 21, Fig. 23 eine Vorderansicht der Zugseilzwischenaufhängung nach Fig. 22, Fig. 24 eine Seitenansicht der Zugseilzwischenaufhängung nach Fig. 22 von ausserhalb, Fig. 25 eine Draufsicht auf die Zugseilzwischenaufhängung nach Fig. 22, Fig. 26 einen Ausschnitt nach Fig. 23 der Vorderansicht der Zugseilzwischenaufhängung nach Fig. 22, Fig. 27 eine Seitenansicht auf die Zugseilzwischenaufhängung nach Fig. 22 von zwischen den Tragseilen 11 und 12, und Fig. 28 eine Draufsicht auf die Zugseilzwischenaufhängung nach Fig. 22. Schliesslich zeigt Fig. 29 eine perspektivische Darstellung eines Ausschnitts eines Teils der an einem der beiden Doppeltragseile 11 und 12 montierten Zugseilzwischenaufhängung nach Fig. 22 mit einer kapazitiven Datenübertragung mit Kondensatorplatten 40. Der Aufbau auf jeder Seite der Pendelbahn mit grossem Tragseilabstand ist identisch zueinander. Nur das Photovoltaikpaneel 30 ist an einer Seite des die beiden Seiten verbindenden Gabelträgers 71 vorgesehen. Bei einer Rolle 21 sind auf jeder Seite der Rolle 21 jeweils zwei Kondensatorplatten 40 in V-förmiger Anordnung mit einem Spalt dazwischen vorgesehen, wobei der Spalt in der Regel den Abstand zwischen 1 und 3 mal dem Durchmesser des Zugseils 15 entspricht. Auf eine Darstellung von Kabelverbindungen ist verzichtet worden.

Die Fig. 30 zeigt nun eine perspektivische Darstellung eines Ausschnitts eines Teils der an einem der beiden Doppeltragseile 11 und 12 einer Pendelbahn mit grossem Tragseilabstand montierten Zugseilzwischenaufhängung nach Fig. 22 mit einem geschlossenen Abwurfschutz 60. Der Sperrbügel 62 wird unterhalb des Rollenträgers 20 ausgeschwenkt und befindet sich in unmittelbarer Nachbarschaft zur Rolle 21. Dabei ist die Positions-Ebene des als plattenförmiger Stab ausgeführten Sperrbügels 62 tiefer als die oberen Ränder der Rolle 21, Dies kann genauso in den anderen Ausführungsbeispielen vorgesehen werden.

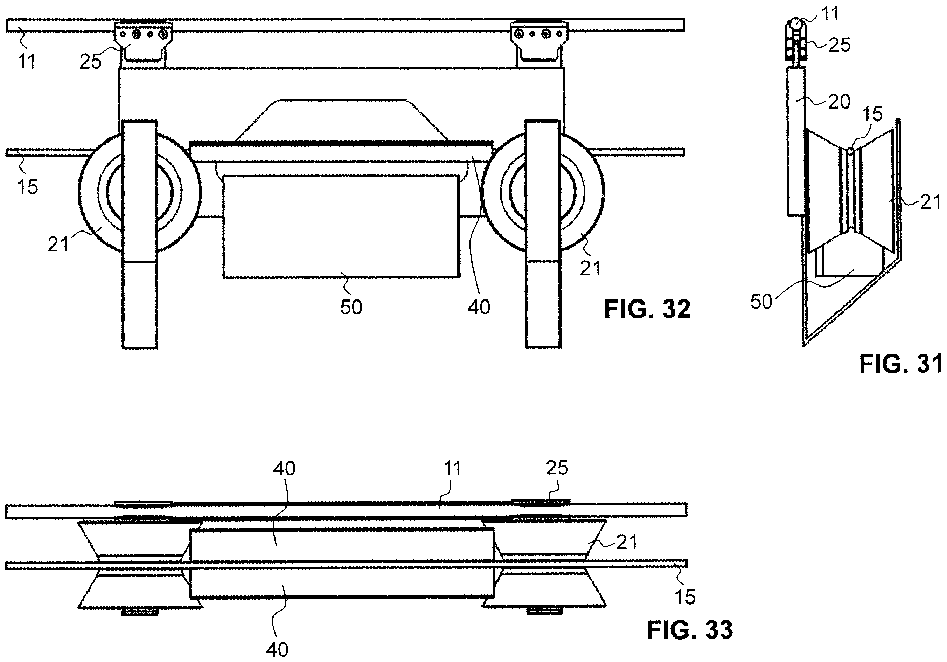

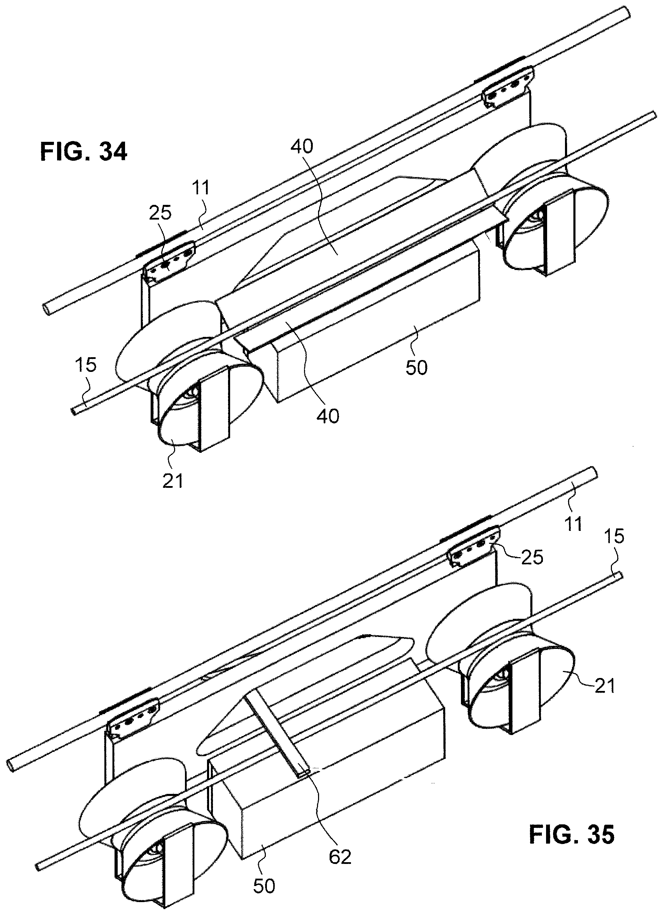

Die Fig. 31 zeigt einen Ausschnitt nach Fig. 23 der Vorderansicht einer Zugseilzwischenaufhängung ähnlich zu der nach Fig. 22 aber mit zwei Zugseilrollen 21, die Fig. 32 eine Seitenansicht auf die Zugseilzwischenaufhängung nach Fig. 31 von zwischen den Tragseilen 11 und 12, Fig. 33 eine Draufsicht auf die Zugseilzwischenaufhängung nach Fig. 32, Fig. 34 eine perspektivische Darstellung eines Ausschnitts eines Teils der an einem der beiden Doppeltragseile 11 und 12 montierten Zugseilzwischenaufhängung nach Fig. 32 mit einer kapazitiven Überwachung.

Schliesslich zeigt Fig. 35 eine perspektivische Darstellung eines Ausschnitts eines Teils der an einem der beiden Doppeltragseile montierten Zugseilzwischenaufhängung nach Fig. 32 mit einem geschlossenen Abwurfschutz mit damit ausgeschwenktem und das Zugseil blockierenden Sperrbügel 62.

Neben der kapazitiven Überwachung, bei der das Ausbleiben von Signalen einen Nothalt in der Station auslöst können auch andere Sensoren verwendet werden.

Induktive Sensoren benötigen eine zusätzliche sichere Übertragung. Optische Sensoren können vereisen oder schneebedeckt werden; auch diese brauchen eine Sicherstellung der Signal-Übertragung. Lastmessbolzen sind erwähnt worden, auch diese benötigen eine zusätzliche Signalübertragung, also entweder eine intermittierende, nicht unbedingt permanente, Funkverbindung oder Telefonverbindung, welche beide einen höheren Wartungsaufwand und Stromaufwand erfordern.

Beim Abwurfschutz ist die Ausführungsform erläutert worden, bei der, nachdem sich die Zugseilrollen 21 zu drehen beginnen, Sensoren den Befehl an den Antrieb 61 des Abwurfschutzes 60 senden, dass dieser öffnet. Die Bewegung des Zugseils 15 kann auch anhand eines optischen Sensors erkannt werden, was aber bei SchneelEis etwas anfälliger ist. Bei Bestehen einer Funk- oder Mobilfunksystem-Verbindung kann von der Seilbahnstation aus ein Signal zum Antrieb des Abwurfschutzes gesendet werden und zwar zum Öffnen oder Schliessen. Die Übertragung der Signale beim Abwurfschutz kann durch die kapazitive Zugseilübertragung erfolgen, durch die oben erwähnten Funk- oder Mobilfunksystem-Verbindungen oder durch Feststellen eines Erdschlusses, also eines Kurzschlusses zwischen Zugseil- und Tragseilpotential.

### BEZUGSZEICHENLISTE

| | | | |
|---|---|---|---|
| 10 | Tragseil | 30 | Photovoltaikpaneel |
| 11 | erstes Tragseil | 40 | Kondensatorplatte |
| 12 | zweites Tragseil | 41 | optischer oder induktiver |
| 15 | Zugseil | | Sensor |
| 20 | Rollenträger | 42 | Lastmessbolzen |
| 21 | Rolle | 50 | Kontrolleinheit |
| 22 | Rahmen | 60 | Abwurfschutz |
| 23 | Längsstrebe | 61 | Antrieb |
| 24 | Gehängeabweiser | 62 | Sperrbügel |
| 25 | Klemme | 63 | Drehachse |
| 26 | Laufwerkabweiser | 65 | Sensor |
| 27 | L-Profil | 71 | Gabelträger |
| 28 | Querprofil | | |

## Patentansprüche

1. Zugseilzwischenaufhängung für eine Seilbahn mit mindestens einem Tragseil (10, 11, 12) und mit mindestens einem Zugseil (15), wobei die Zugseilzwischenaufhängung einen Rahmen (20) umfasst, an dem mindestens eine Seilrolle (21) je Zugseil (15) vorgesehen ist, **dadurch gekennzeichnet, dass** eine Kontrolleinheit (50), ein mit dieser verbundener Energiespeicher oder Energieerzeuger (30) und eine Übertragungseinheit (40, 40) von Signalen der Kontrolleinheit (50) an eine Empfangsstation der Seilbahnstation vorgesehen ist, dass die Übertragungseinheit (40, 40; 41; 42) mindestens zwei voneinander isolierte in einem vorbestimmen Abstand voneinander angeordnete Kondensatorplatten (40, 40) aufweist, die mit der Kontrolleinheit (50) verbunden sind, welche Kontrolleinheit (50) ausgestaltet ist, um über die Kondensatorplatten (40, 40) kontinuierlich oder intermittierend Präsenzsignale über das zugeordnete Zugseil (15) an die Empfangsstation der Seilbahnstation zu übermitteln, so dass bei Abwesenheit des zugeordneten Zugseils (15) an oder auf der entsprechenden Seilrolle (21) durch Abwesenheit von Präsenzsignalen ein Seilabwurf-Signal in der Seilbahnstation erzeugbar ist.

2. Zugseilzwischenaufhängung nach Anspruch 1, bei der die mindestens zwei Kondensatorplatten (40, 40) in der unmittelbaren Umgebung einer oder der Seilrollen (21) in einem vorbestimmten Abstand voneinander und von einem zu führenden Zugseil (15) angeordnet sind.

3. Zugseilzwischenaufhängung nach Anspruch 2, bei der zwei Seilrollen (21) in einem Längsabstand der Zugseilzwischenaufhängung angeordnet sind und bei der die Kondensatorplatten (40) zwischen den Seilrollen (21) V-förmig unterhalb der Längsverbindungslinie der Umfangsoberfläche der Seilrollen (21) zusammenlaufen.

4. Zugseilzwischenaufhängung nach einem der Ansprüche 1 bis 3, bei der die in einem vorbestimmten Abstand voneinander angeordneten Kondensatorplatten (40, 40) einen gleichförmigen oder in V-Form vorbestimmten Abstand voneinander haben, bei dem der minimale Abstand von Bereichen der zwei Kondensatorplatten (40, 40) zwischen dem Einfachen und Dreifachen der Seildicke des Zugseils (15) entspricht.

5. Zugseilzwischenaufhängung nach einem der Ansprüche 1 bis 4, **dadurch gekennzeichnet, dass** mindestens ein Lastmessbolzen (42) des auf die Seilrollenoberflächen lastenden Drucks des Zugseiles (15) je Zugseil (15) vorgesehen ist, der mit der Kontrolleinheit (50) verbunden ist und mit dem die Präsenz des zugeordneten Zugseils (15) an oder auf der entsprechenden Seilrolle (21) feststellbar ist.

6. Zugseilzwischenaufhängung nach einem der Ansprüche 1 bis 5, bei der der Energiespeicher oder Energieerzeuger (30) einen oder mehrere Energiespeicher oder Energieerzeuger (30) aus der Gruppe umfasst: Photovoltaikpaneel, Akkumulator, aufladbare oder nicht aufladbare Batterie, Seilrollen (21) gestützter Nabendynamo.

7. Zugseilzwischenaufhängung nach einem der Ansprüche 1 bis 6, **dadurch gekennzeichnet, dass** sie ferner einen Abwurfschutz (60) je Zugseil (15) umfasst, wobei der Abwurfschutz (60) einen Antrieb (61) und mindestens einen Sperrbügel (62) umfasst, welcher Sperrbügel (62) aus einer nicht in das Zugseil (15) eingreifenden Ruheposition durch den Antrieb (61) in Bezug auf eine benachbarte Seilrolle (21) über diese bewegbar ist, um einen Abwurf des Zugseils zu verhindern.

8. Zugseilzwischenaufhängung nach Anspruch 7, bei der die Bewegung des Sperrbügels eine in einer Ebene ausgeführte Schwenkbewegung ist, und bei der die besagte Ebene des hinein geschwenkten Sperrbügels (62) tiefer ist als die Umfangränder einer eine Umlaufnut aufweisenden benachbarten Seilrolle (21).

9. Zugseilzwischenaufhängung nach Anspruch 7 oder 8, bei der der Abwurfschutz (60) einen Anschlagschalter aufweist, mit dem die Geschlossenstellung des Sperrbügels (62) detektierbar ist.

10. Zugseilzwischenaufhängung nach einem der Ansprüche 7 bis 9, bei der eine Kontrolleinheit (50) auf Empfang eines Verriegelungssignals den Sperrbügel (62) in die Geschlossenstellung bewegt und auf Empfang eines Entriegelungssignals den Sperrbügel (62) in die Offenstellung bewegt.

11. Zugseilzwischenaufhängung nach Anspruch 10, bei der die Zugseilzwischenaufhängung einen eine Drehung der Seilrolle (21) feststellenden Sensor aufweist, wobei nach Stoppen der Seilrolle (21) das Verriegelungssignal nach einem vorbestimmten Zeitintervall ausgelöst wird und nach Anlaufen der Seilrolle (21) über ein vorbestimmtes Zeitintervall das Entriegelungssignal ausgelöst wird.

12. Zugseilzwischenaufhängung nach Anspruch 10, bei der die Zugseilzwischenaufhängung einen Funk- oder Mobilfunksystem-Empfänger aufweist, mit dem von einer Seilbahnstation ein Verriegelungssignal und ein Entriegelungssignal auslösbar ist.

13. Zugseilzwischenaufhängung nach einem der Ansprüche 7 bis 9, bei der die Bewegung des Sperrbügels (62) durch den Antrieb (61) aus der nicht in das Zugseil (15) eingreifenden Ruheposition in Bezug auf eine benachbarte Seilrolle (21) über dies Zugseil (15) eine Verschwenkbewegung oder eine Linearbewegung ist.

## Claims

1. Intermediate traction cable suspension for a ropeway with at least one carrying cable (10, 11, 12) and with at least one traction cable (15), wherein the intermediate traction cable suspension comprises a frame (20) on which at least one cable pulley (21) is provided for each traction cable (15), **characterised in that in that** a control unit (50), an energy storage device or energy generator (30) connected thereto and a transmission unit (40, 40) of signals from the control unit (50) to a receiving station of the ropeway station are provided, **in that** the transmission unit (40, 40; 41; 42) has at least two capacitor plates (40, 40) which are isolated from one another and arranged at a predetermined distance from one another and which are connected to the control unit (50), which control unit (50) is adapted to transmit signals via the capacitor plates (40, 40) to continuously or intermittently transmit presence signals via the associated traction cable (15) to the receiving station of the ropeway station, so that in the absence of the associated traction cable (15) at or on the corresponding cable pulley (21), a cable release signal can be generated in the ropeway station due to the absence of presence signals.

2. Intermediate traction cable suspension according to claim 1, in which the at least two capacitor plates (40, 40) are arranged in the immediate vicinity of one or the cable pulleys (21) at a predetermined distance from each other and from a traction cable (15) to be guided.

3. Intermediate traction cable suspension according to claim 2, in which two cable pulleys (21) are arranged at a longitudinal distance from the intermediate traction cable suspension and in which the capacitor plates (40) between the cable pulleys (21) converge in a V-shape below the longitudinal connecting line of the circumferential surface of the cable pulleys (21).

4. Intermediate traction cable suspension according to one of claims 1 to 3, in which the capacitor plates (40, 40) arranged at a predetermined distance from one another have a uniform or V-shaped predetermined distance from one another, in which the minimum distance between regions of the two capacitor plates (40, 40) corresponds to between one and three times the cable thickness of the traction cable (15).

5. Intermediate traction cable suspension according to one of claims 1 to 4, **characterised in that** at least one measuring bolt (42) of the pressure of the traction cable (15) acting on the cable pulley surfaces is provided for each traction cable (15), which is connected to the control unit (50) and with which the presence of the associated traction cable (15) at or on the corresponding cable pulley (21) can be determined.

6. Intermediate traction cable suspension according to any one of claims 1 to 6, wherein the energy storage device or energy generator (30) comprises one or more energy storage devices or energy generators (30) selected from the group consisting of: photovoltaic panel, accumulator, rechargeable or non-rechargeable battery, pulley (21) supported hub dynamo.

7. Intermediate traction cable suspension according to one of claims 1 to 6, **characterised in that** it further comprises an anti-drop guard (60) for each traction cable (15), wherein the anti-drop guard (60) comprises a drive (61) and at least one locking bracket (62), which locking bracket (62) can be moved from a rest position not engaging the traction cable (15) by the drive (61) in relation to an adjacent cable pulley (21) above it in order to prevent the traction cable from being dropped.

8. Intermediate traction cable suspension according to claim 7, in which the movement of the locking bracket is a swivelling movement executed in a plane, and in which said plane of the swivelled-in locking bracket (62) is lower than the circumferential edges of a neighbouring cable pulley (21) having a circumferential groove.

9. Intermediate traction cable suspension according to claim 7 or 8, in which the anti-drop guard (60) has a stop switch with which the closed position of the locking bracket (62) can be detected.

10. Intermediate traction cable suspension according to any one of claims 7 to 9, wherein a control unit (50) moves the locking bracket (62) to the closed position upon receipt of a locking signal and moves the locking bracket (62) to the open position upon receipt of an unlocking signal.

11. Intermediate traction cable suspension according to claim 10, wherein the intermediate traction cable suspension comprises a sensor detecting a rotation of the cable pulley (21), wherein after stopping the cable pulley (21) the locking signal is triggered after a predetermined time interval and after starting the cable pulley (21) over a predetermined time interval the unlocking signal is triggered.

12. Intermediate traction cable suspension according to claim 11, in which the intermediate traction cable suspension has a radio or mobile radio system receiver with which a locking signal and an unlocking signal can be triggered by a ropeway station.

13. Intermediate traction cable suspension according to any one of claims 7 to 9, in which the movement of the locking bracket (62) by the drive (61) from the rest position not engaging in the traction cable (15) with respect to a neighbouring cable pulley (21) via this traction cable (15) is a pivoting movement or a linear movement.

## Revendications

1. Suspension intermédiaire de câble tracteur pour un téléphérique avec au moins un câble porteur (10, 11, 12) et avec au moins un câble tracteur (15), la suspension intermédiaire de câble tracteur comprenant un cadre (20) sur lequel est prévue au moins une poulie (21) par câble tracteur (15), **caractérisée**, qu'il est prévu une unité de contrôle (50), un accumulateur d'énergie ou un générateur d'énergie (30) relié à celle-ci et une unité de transmission (40, 40) de signaux de l'unité de contrôle (50) à une station de réception de la station de téléphérique, que l'unité de transmission (40, 40 ; 41 ; 42) présente au moins deux plaques de condensateur (40, 40) isolées l'une de l'autre et disposées à une distance prédéterminée l'une de l'autre, qui sont reliées à l'unité de contrôle (50), laquelle unité de contrôle (50) est adapté pour, par l'intermédiaire des plaques de condensateur (40, 40), transmettre de manière continue ou intermittente des signaux de présence par l'intermédiaire du câble tracteur associé (15) à la station de réception de la station de téléphérique, de sorte qu'en l'absence du câble tracteur associé (15) sur ou au niveau de la poulie correspondante (21), un signal de largage de câble peut être généré dans la station de téléphérique par l'absence de signaux de présence.

2. Suspension intermédiaire de câble tracteur selon la revendication 1, dans laquelle les au moins deux plaques de condensateur (40, 40) sont disposées dans l'environnement immédiat d'une ou des poulies de câble (21) à une distance prédéterminée l'une de l'autre et d'un câble tracteur (15) à guider.

3. Suspension intermédiaire de câble tracteur selon la revendication 2, dans laquelle deux poulies de câble (21) sont disposées à une distance longitudinale de la suspension intermédiaire de câble tracteur et dans laquelle les plaques de condensateur (40) entre les poulies de câble (21) convergent en forme de V en dessous de la ligne de jonction longitudinale de la surface périphérique des poulies de câble (21).

4. Suspension intermédiaire de câble tracteur selon l'une quelconque des revendications 1 à 3, dans laquelle les plaques de condensateur (40, 40) disposées à une distance prédéterminée l'une de l'autre sont espacées l'une de l'autre d'une distance uniforme ou prédéterminée en forme de V, dans laquelle la distance minimale entre des zones des deux plaques de condensateur (40, 40) est comprise entre une et trois fois l'épaisseur du câble tracteur (15).

5. Suspension intermédiaire de câble tracteur selon l'une des revendications 1 à 4, **caractérisée en ce qu'**il est prévu au moins un axe de mesure de charge (42) de la pression du câble tracteur (15) exercée sur les surfaces des poulies par câble tracteur (15), qui est relié à l'unité de contrôle (50) et qui permet de détecter la présence du câble tracteur (15) associé sur ou contre la poulie (21) correspondante.

6. Suspension intermédiaire de câble tracteur selon l'une quelconque des revendications 1 à 5, dans laquelle le dispositif de stockage ou de production d'énergie (30) comprend un ou plusieurs dispositifs de stockage ou de production d'énergie (30) choisis dans le groupe : panneau photovoltaïque, accumulateur, batterie rechargeable ou non, dynamo de moyeu assistée par poulies (21).

7. Suspension intermédiaire de câble tracteur selon l'une quelconque des revendications 1 à 6, **caractérisée en ce qu'**elle comprend en outre une protection contre le largage (60) par câble tracteur (15), la protection contre le largage (60) comprenant un entraînement (61) et au moins un étrier de blocage (62), lequel étrier de blocage (62) peut être déplacé par l'entraînement (61) d'une position de repos non engagée dans le câble tracteur (15) par rapport à une poulie voisine (21) au-dessus de celle-ci, afin d'empêcher le largage du câble tracteur.

8. Suspension intermédiaire de câble tracteur selon la revendication 7, dans laquelle le mouvement de l'étrier de blocage est un mouvement de pivotement effectué dans un plan, et dans laquelle ledit plan de l'étrier de blocage (62) pivoté vers l'intérieur est plus bas que les bords périphériques d'une poulie adjacente (21) présentant une rainure circulaire.

9. Suspension intermédiaire de câble tracteur selon la revendication 7 ou 8, dans laquelle la protection contre le largage (60) comporte un interrupteur de butée permettant de détecter la position fermée de l'étrier de blocage (62).

10. Suspension intermédiaire de câble tracteur selon l'une quelconque des revendications 7 à 9, dans laquelle une unité de contrôle (50) déplace l'étrier de blocage (62) vers la position fermée à la réception d'un signal de verrouillage et déplace l'étrier de blocage (62) vers la position ouverte à la réception d'un signal de déverrouillage.

11. Suspension intermédiaire de câble tracteur selon la revendication 10, dans laquelle la suspension intermédiaire de câble tracteur présente un capteur détectant une rotation de la poulie (21), le signal de verrouillage étant déclenché après l'arrêt de la poulie (21) après un intervalle de temps prédéfini et le signal de déverrouillage étant déclenché après le démarrage de la poulie (21) pendant un intervalle de temps prédéfini.

12. Suspension intermédiaire de câble tracteur selon la revendication 10, dans laquelle la suspension intermédiaire de câble tracteur présente un récepteur de système radio ou de système de radiocommunication mobile, avec lequel un signal de verrouillage et un signal de déverrouillage peuvent être déclenchés par une station de téléphérique.

13. Suspension intermédiaire de câble tracteur selon l'une quelconque des revendications 7 à 9, dans laquelle le mouvement de l'étrier de blocage (62) par l'entraînement (61) à partir de la position de repos non engagée dans le câble tracteur (15) par rapport à une poulie adjacente (21) par l'intermédiaire dudit câble tracteur (15) est un mouvement de pivotement ou un mouvement linéaire.
